# EUROPÄISCHE PATENTSCHRIFT

(11) **EP 3 607 703 B1**
(45) Veröffentlichungstag und Bekanntmachung des Hinweises auf die Patenterteilung: **11.08.2021**
(21) Anmeldenummer: 18716199.7
(22) Anmeldetag: 03.04.2018
(51) Int. Cl.: H04L 12/40, H04L 25/03

(54) **TEILNEHMERSTATION FÜR EIN BUSSYSTEM UND VERFAHREN ZUR VERBESSERUNG DER EINHALTUNG DER BIT-TIMING-ANFORDERUNG IN EINEM BUSSYSTEM**
SUBSCRIBER STATION FOR A BUS SYSTEM AND METHOD FOR IMPROVING THE COMPLIANCE WITH THE BIT-TIMING REQUEST IN A BUS SYSTEM
STATION D'ABONNÉ POUR UN SYSTÈME DE BUS ET PROCÉDÉ D'AMÉLIORATION DU RESPECT DE L'EXIGENCE DE RYTHME DES BITS DANS UN SYSTÈME DE BUS

(30) Priorität: 05.04.2017 DE 102017205785
(43) Veröffentlichungstag der Anmeldung: 12.02.2020
(73) Patentinhaber: Robert Bosch GmbH, 70442 Stuttgart (DE)
(72) Erfinder: WALKER, Steffen, 72770 Reutlingen (DE)
(86) Internationale Anmeldenummer: PCT/EP2018/058415
(87) Internationale Veröffentlichungsnummer: WO 2018/185064

(56) Entgegenhaltungen:
- EP-A1- 3 319 274
- DE-A1-102014 204 050
- DE-A1-102014 223 838

## Beschreibung

Die vorliegende Erfindung betrifft eine Teilnehmerstation für ein Bussystem und ein Verfahren zur Verbesserung der Einhaltung der Bit-Timing-Anforderung in einem Bussystem, um auch bei einer möglichen Asymmetrie von empfangenen Bits bei hohen Datenraten eine gute Empfangsqualität zu erzielen.

### Stand der Technik

Zwischen Sensoren und Steuergeräten findet in vielen Bereichen das CAN-Bussystem Anwendung. Beim CAN-Bussystem werden Nachrichten zwischen den Teilnehmern des Bussystems mittels des CAN-Protokolls übertragen, wie es in der CAN-Spezifikation in der ISO11898 beschrieben ist. DE10 000 305 A1 beschreibt das CAN (Controller Area Network) sowie eine als TTCAN (Time Trigger CAN = zeit-getriggertes CAN) bezeichnete Erweiterung des CAN.

Ein klassischer CAN-Rahmen ist aufgeteilt in Arbitrations- und Datenfeld. Mit dem Arbitrationsfeld wird mit Hilfe einer bitweisen Arbitrierung bestimmt, welcher der Teilnehmer des Bussystems einen exklusiven Zugriff auf ein Kommunikationsmedium zwischen den Teilnehmern des Bussystems hat. Hierbei können, wie bereits in der DE 10 2012 200 997 beschrieben, anfänglich mehrere Teilnehmerstationen gleichzeitig Daten über das Bussystem übertragen, ohne dass hierdurch die Datenübertragung gestört wird.

Bei dem CAN-Protokoll ist die Bitrate in Arbitrierungs- und Datenfeld gleich, so dass gilt Bitrate_arb = Bitrate_data. Die maximale Bitrate beträgt 1 Mbps (Mega Bit pro Sekunde), das heißt die Bitzeit beträgt 1µs.

Das CAN-Protokoll wurde unter dem Namen CAN-FD weiterentwickelt, gemäß welchem Nachrichten entsprechend Spezifikation "CAN with Flexible Data-Rate, Specification Version 1.0" (Quelle http://www.semiconductors.bosch.de) übertragen werden. Mit CAN-FD ist eine Erhöhung der Datenrate für Systeme möglich, bei welchen die Datenrate bisher durch die Buslänge der Systeme begrenzt war.

Bei CAN-FD wird im Vergleich zum klassischen CAN am Ende der Arbitrationsphase die Bitrate für die folgende Datenphase auf beispielsweise 2 Mbps, 5 Mbps erhöht. Daher gilt Bitrate_arb < Bitrate_data.

In der Datenphase mit höherer Bitrate, wie beispielsweise 2 oder 5 Mbit/s, ist es nun sehr wichtig, dass die Zustandswechsel vom dominanten Zustand zum rezessiven Zustand und vom rezessiven Zustand zum dominanten Zustand bezüglich Ihrer Dauer möglichst gleich sind. Das gilt für den Sendepfad über den Anschluss TxD für ein Sendesignal hin zum Bus (VDIFF=CAN_H-CAN_L) und auch vom Bus (VDIFF) hin zum Anschluss RxD für ein Empfangssignal. Damit kann eine gewisse Mindest-Bitzeit eines einzelnen Bits des CAN-Rahmens garantiert werden. Bei starker Ungleichheit dieser Zeiten unterschreiten Bitzeiten einzelner Bits einen in der Physical Layer Spezifikation ISO11898-2:2016 festgelegten Mindestwert und könnten vom CAN-Protocol-Controller oder einer Kommunikationssteuereinrichtung einer Teilnehmerstation des Bussystems nicht mehr erkannt werden.

Dies führt zu Störungen in der Kommunikation im Bussystem. Je nach erfolgter Störung kann dies sicherheitsrelevante Folgen für einen Benutzer des Bussystems oder der im Bussystem verbundenen Sensoren und Steuergeräte haben. Um dies zu vermeiden, sind die Anwender des Bussystems gezwungen, das Bussystem in sehr engen Grenzen oder sehr wenig Freiheitsgraden bei der Auslegung der Bustopologie und Bitrate zu dimensionieren.

Die Offenlegungsschrift DE 10 2014 204 050 A1 beschreibt eine Teilnehmerstation für ein Bussystemeine mit einer Sende-/Empfangseinrichtung zum Senden oder Empfangen einer Nachricht, wobei die Sende-/Empfangseinrichtung eine Einrichtung zur Sendesignalbearbeitung eines von der Sende-/Empfangseinrichtung zu sendenden Sendesignals aufweist. Diese Einrichtung ist zur Einstellung einer vorbestimmten Bitsymmetrie von Bits des Sendesignals durch Erzeugung eines internen Sendesignals für die Nachricht ausgestaltet, wobei bei dem internen Sendesignal die Dominantphase der Bits verkürzt und die Rezessivphase von Bits verlängert ist.

Die Offenlegungsschrift DE 10 2014 223 838 A1 beschreibt eine Teilnehmerstation für ein Bussystem mit einer Erfassungseinheit zur Erfassung einer Bitbreite von empfangenen Bits einer über einen Bus gesendeten Nachricht, und eine Regeleinheit zur Ermittlung der Bitbreite von mindestens einem Bit einer zu sendenden Nachricht, um die Bussystem-Anforderungen an das Tastverhältnis zu erfüllen und um die Bitbreite durch Verzögerung der Flanken eines Sendesignals auf der Grundlage der erfassten Bitbreite zu regeln.

### Offenbarung der Erfindung

Daher ist es Aufgabe der vorliegenden Erfindung, eine Teilnehmerstation für ein Bussystem und ein Verfahren zur Verbesserung der Einhaltung der Bit-Timing-Anforderung in einem Bussystem bereitzustellen, welche die zuvor genannten Probleme lösen. Insbesondere sollen eine Teilnehmerstation für ein Bussystem und ein Verfahren zur Verbesserung der Einhaltung der Bit-Timing-Anforderung in einem Bussystem bereitgestellt werden, bei welchen die Einhaltung der Bit-Timing-Anforderungen einfach, wirksam und kostengünstig erfüllt werden kann, so dass keine fehlerhaften Übertragungen auftreten.

Die Aufgabe wird durch eine Teilnehmerstation für ein Bussystem nach Anspruch 1 gelöst.

Mit der Teilnehmerstation ist auf sehr einfache und damit kostengünstige Weise die Einhaltung der Bit-Timing-Anforderung des Bussystems sicherer als bisher möglich. Dadurch werden fehlerhafte Übertragungen zwischen Teilnehmerstationen des Bussystems verhindert bzw. Systemanwendungen mit CAN-FD ermöglicht. Die verbesserte Einhaltung der Bit-Timing-Anforderung schafft Spielraum für die Dimensionierung der Bustopologie.

Die Einhaltung der Bit-Timing-Anforderung des Bussystems wird durch eine gezielte Beschaltung mit mindestens einem elektrischen Widerstand zwischen der Kommunikationssteuereinrichtung und der Sende-Empfangseinrichtung einer elektronischen Steuereinheit der Teilnehmerstation erreicht. Dadurch wird ermöglicht, eine elektronische Steuereinheit (ECU) der Teilnehmerstation von CAN auf CAN-FD zu migrieren, ohne die Sende-/Empfangseinrichtung oder den Transceiver austauschen zu müssen. Aufgrund dessen kann die Migration von CAN auf CAN-FD ohne Neuentwicklung der Sende-/Empfangseinrichtung oder des Transceivers erfolgen. Dadurch ergibt sich ein deutlicher Kostenvorteil.

Die zuvor beschriebene Ausgestaltung der Teilnehmerstation ist auch bei bereits bestehenden Teilnehmerstationen einfach nachrüstbar. Dies ist besonders für Teilnehmerstationen von Vorteil, die in Bezug auf ein CAN-FD-Bit-Timing im grenzlagigen Bereich betrieben werden müssten. Mit der zuvor beschriebenen Ausgestaltung der Teilnehmerstation kann ein größerer Sicherheitsabstand für die benötigte Mindest-Bitzeit eines einzelnen Bits des CAN-Rahmens erreicht werden. Dadurch hat der Planer oder Konstrukteur des Bussystems, wie beispielsweise ein Fahrzeughersteller bzw. Anwender, höhere Freiheitsgrade bei der Auslegung der Bustopologie und Bitrate.

Vorteilhafte weitere Ausgestaltungen der Teilnehmerstation sind in den abhängigen Ansprüchen beschrieben.

Möglicherweise hat die Verzögerungseinheit mindestens einen Widerstand, der mit einer Kapazität ein RC-Glied bildet, das zwischen die Kommunikationssteuereinrichtung und die Sende-/Empfangseinrichtung geschaltet ist, und eine Einheit, die ausgestaltet ist, eine Empfangsschwelle für ein empfangenes Signal für eine ansteigende Flanke des Signals um einen ersten vorbestimmten Wert zeitlich zu verzögern und von einem bisherigen Spannungspegel auf einen niedrigeren Spannungspegel herabzusetzen und für eine fallende Flanke des Signals um einen zweiten vorbestimmten Wert zeitlich zu verzögern und von einem bisherigen Spannungspegel auf einen niedrigeren Spannungspegel herabzusetzen. Hierbei kann die Kapazität eine parasitäre Kapazität der Signalleitung zwischen der Kommunikationssteuereinrichtung und der Sende-/Empfangseinrichtung sein oder zudem eine Kapazität eines Kondensators aufweisen, der mit dem Widerstand als RC-Glied verschaltet ist.

Es ist auch denkbar, dass der mindestens eine Widerstand zwischen einen Anschluss der Kommunikationssteuereinrichtung, der für ein von der Kommunikationssteuereinrichtung zu sendendes Sendesignal vorgesehen ist, und einen Anschluss der Sende-/Empfangseinrichtung geschaltet ist, der für das von der Kommunikationssteuereinrichtung gesendete Sendesignal vorgesehen ist. In diesem Fall kann der Kondensator an seinem einen Anschluss mit dem mindestens einen Widerstand und dem Anschluss der Sende-/Empfangseinrichtung für ein von der Kommunikationssteuereinrichtung gesendetes Sendesignal verbunden und an seinem anderen Anschluss mit Masse verbunden.

Es ist außerdem denkbar, dass der mindestens eine Widerstand zwischen einen Anschluss der Sende-/Empfangseinrichtung, der für ein von der Sende-/Empfangseinrichtung vom Bus empfangenes Empfangssignal vorgesehen ist, und einen Anschluss der Kommunikationssteuereinrichtung geschaltet ist, der für das von der Sende-/Empfangseinrichtung vom Bus empfangene Empfangssignal vorgesehen ist. Hierbei kann der Kondensator an seinem einen Anschluss mit dem mindestens einen Widerstand und dem Anschluss (RxD) der Kommunikationssteuereinrichtung für ein von der Sende-/Empfangseinrichtung empfangenes Empfangssignal verbunden sein und an seinem anderen Anschluss mit Masse verbunden sein.

Vorteilhaft ist auch, wenn die Verzögerungseinheit ausgestaltet ist, die Verzögerung abhängig vom Buszustand einzubringen. Zusätzlich oder alternativ kann die Sende-/Empfangseinrichtung eine Einheit aufweisen, die ausgestaltet ist, das auf den Bus zu sendende Signal abhängig vom Buszustand zeitlich zu verzögern. Zusätzlich oder alternativ kann die Kommunikationssteuereinrichtung eine Einheit aufweisen, die ausgestaltet ist, das zu sendende Sendesignal oder das von der Sende-/Empfangseinrichtung vom Bus empfangene Empfangssignal abhängig vom Buszustand zeitlich zu verzögern. Zusätzlich oder alternativ kann die Sende-/Empfangseinrichtung eine Einheit aufweisen, die ausgestaltet ist, Buspegel eines TxD-Treibers herabzusetzen und/oder eines RxD-Treibers herabzusetzen. In allen diesen Ausführungsvarianten kann die Einhaltung der Bit-Timing-Anforderung des Bussystems sehr flexibel an die jeweiligen vorhandenen Gegebenheiten angepasst werden.

Die zuvor beschriebene Teilnehmerstation kann Teil eines Bussystems sein, das einen Bus und mindestens zwei Teilnehmerstationen aufweist, welche über den Bus derart miteinander verbunden sind, dass sie miteinander kommunizieren können, wobei mindestens eine der mindestens zwei Teilnehmerstationen eine zuvor beschriebene Teilnehmerstation ist.

Die zuvor genannte Aufgabe wird zudem durch ein Verfahren zur Verbesserung der Einhaltung der Bit-Timing-Anforderung in einem Bussystem nach Anspruch 10 gelöst.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Der Schutzbereich der Erfindung ist durch den Wortlaut der Ansprüche festgelegt.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet wird;
Fig. 3 ein vereinfachtes Schaltbild einer elektronischen Steuereinheit als Steuergerät für die Teilnehmerstation des Bussystems gemäß dem ersten Ausführungsbeispiel;
Fig. 4 einen Spannungsverlauf eines Empfangssignals über der Zeit, wie es an einer Kommunikationssteuereinrichtung der Teilnehmerstation des Bussystems gemäß dem ersten Ausführungsbeispiel empfangen wird, im Vergleich zu einem Empfangssignal über der Zeit, wie es an einer Kommunikationssteuereinrichtung einer herkömmlichen Teilnehmerstation für das Bussystem empfangen wird; und
Fig. 5 ein vereinfachtes Schaltbild einer elektronischen Steuereinheit für eine Teilnehmerstation eines Bussystems gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

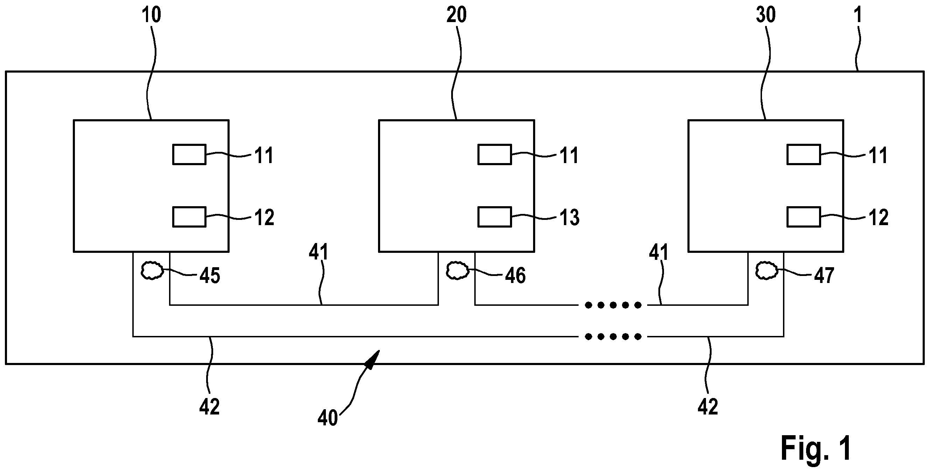

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstationen 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Kommunikationssteuereinrichtung 11 kann wie ein herkömmlicher CAN-Controller und/oder CAN-FD-Controller ausgeführt sein.

Die Sende-/Empfangseinrichtung 13 der Teilnehmerstation 20 dient zum Senden der Nachrichten 46 in Form eines Sendesignals TX an eine andere Teilnehmerstation des Bussystems 1 und zum Empfangen der Nachrichten 45, 47 der anderen Teilnehmerstationen des Bussystems 1 in Form eines Empfangssignals RX. Die Sende-/Empfangseinrichtung 13 kann wie ein herkömmlicher CAN-Transceiver ausgeführt sein.

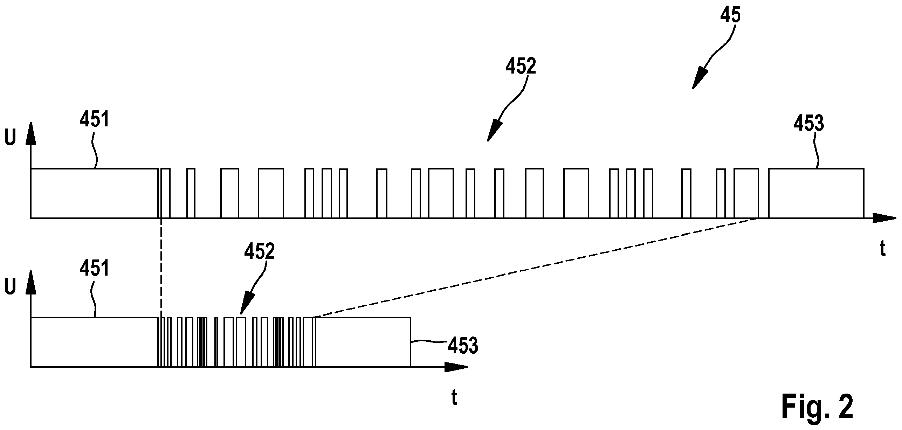

Fig. 2 zeigt in ihrem oberen Teil anhand der Nachricht 45 einen CAN-Rahmen, wie er von der Sende-/Empfangseinrichtung 12 oder der Sende-/Empfangseinrichtung 13 gesendet wird, und in ihrem unteren Teil einen CAN-FD-Rahmen, wie er von der Sende-/Empfangseinrichtung 12 gesendet werden kann. Die Nachrichten 45, 47 sind also möglicherweise jeweils ein CAN-Rahmen oder ein CAN-FD-Rahmen. Dagegen sind die Nachrichten 46 möglicherweise jeweils ein CAN-Rahmen.

Gemäß Fig. 2 sind der CAN-Rahmen und der CAN-FD-Rahmen für die CAN-Kommunikation auf dem Bus 40 grundlegend in zwei unterschiedliche Phasen unterteilt, nämlich die Arbitrationsphasen 451, 453 und einen Datenbereich 452, der bei CAN-HS auch Datenfeld bzw. bei CAN-FD auch Datenphase genannt wird. Bei CAN-FD wird im Vergleich zum klassischen CAN am Ende der Arbitrationsphase 451 die Bitrate für die folgende Datenphase auf beispielsweise 2, 4, 5, 8Mbps usw. erhöht. Damit gilt, dass bei CAN-FD die Bitrate in den Arbitrationsphasen 451, 453 kleiner als die Bitrate im Datenbereich 452 ist. Bei CAN-FD ist der Datenbereich 452 gegenüber dem Datenbereich 452 des CAN-Rahmens deutlich verkürzt.

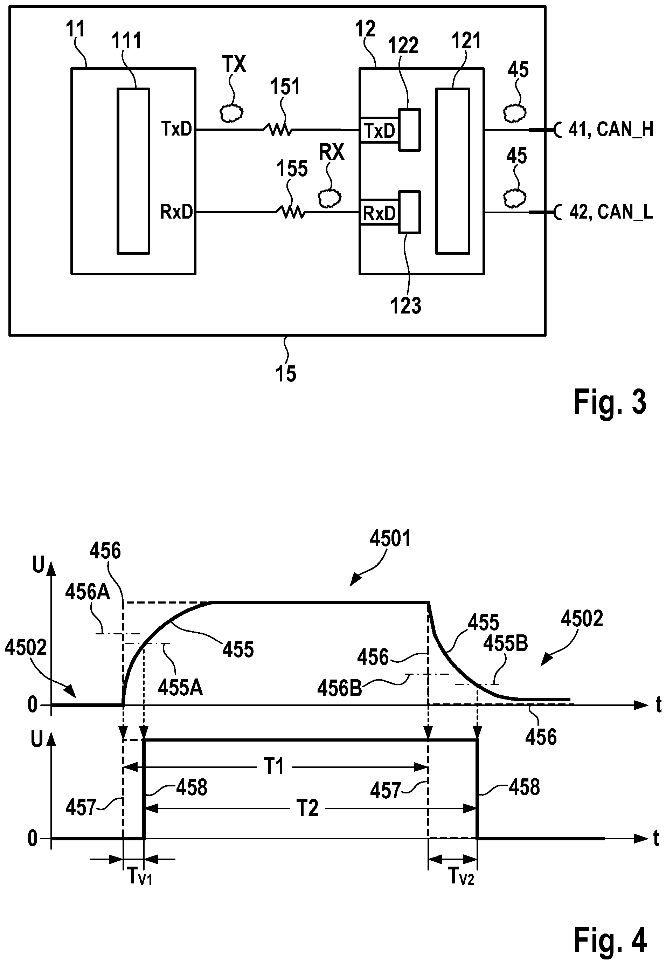

In Fig. 3 ist der Aufbau einer ECU (electronic control unit = elektronische Steuereinheit) oder eines Steuergeräts 15 einer Teilnehmerstation 10, 30 dargestellt. Die Kommunikationssteuereinrichtung 11 oder Protocol Controller hat eine Auswerteeinheit 111 und Anschlüsse TxD, RxD für eine TxD-Signalleitung und eine RxD-Signalleitung. Die Sende-/Empfangseinrichtung 12 hat eine Empfangspegelanpasseinheit 121 und ebenfalls Anschlüsse TxD, RxD für die TxD-Signalleitung und die RxD-Signalleitung. An dem Anschluss TxD ist ein TxD-Treiber 122 vorgesehen, welcher den Pegel des von der Kommunikationssteuereinrichtung 11 empfangenen Sendesignals TX aktiv auf einen vorbestimmten Pegel treibt. An dem Anschluss RxD ist ein RxD-Treiber 123 vorgesehen, welcher den Pegel des Empfangssignals RX aktiv für eine Übertragung zu der Kommunikationssteuereinrichtung 11 auf einen vorbestimmten Pegel treibt.

Somit ist die TxD-Signalleitung für das Sendesignal TX an TxD-Anschlüsse der Kommunikationssteuereinrichtung 11 und der Sende-/Empfangseinrichtung 12 angeschlossen. Zudem ist die RxD-Signalleitung für das Empfangssignal RX an RxD-Anschlüsse der Kommunikationssteuereinrichtung 11 und der Sende-/Empfangseinrichtung 12 angeschlossen. In die TxD-Signalleitung ist mindestens ein Widerstand 151 in Reihe geschaltet. Zudem ist in die RxD-Signalleitung mindestens ein Widerstand 155 in Reihe geschaltet.

Im Betrieb des Steuergeräts 15 sendet die Kommunikationssteuereinrichtung 11 oder Protocol Controller über die TxD-Signalleitung an die Sende-/Empfangseinrichtung 12 je nach Bedarf Daten in Form des Sendesignals TX für beispielsweise eine Nachricht 45. Die Sende-/Empfangseinrichtung 12 setzt das Sendesignal TX als Nachricht 45 auf den Busleitungen 41, 42 oder CAN_H und CAN_L um. Außerdem wird beispielsweise eine Nachricht 47, die von der Sende-/Empfangseinrichtung 12 über die Busleitungen 41, 42 oder CAN_H und CAN_L empfangen wurde, mittels der Sende-/Empfangseinrichtung 12 als Daten in Form des Empfangssignals RX umgesetzt und über die RxD-Signalleitung an die Kommunikationssteuereinrichtung 11 weitergeleitet.

Durch den zusätzlich in die TxD-Signalleitung eingebauten mindestens einen Widerstand 151 werden die CAN-FD-Bit-Timings des Signals auf der TxD-Signalleitung positiv beeinflusst. Durch den zusätzlich in die RxD-Signalleitung eingebauten mindestens einen Widerstand 155 werden die CAN-FD-Bit-Timings des Signals auf der RxD-Signalleitung positiv beeinflusst. Dies ist in Fig. 4 für einen rezessiven Buszustand 4501 eines Empfangssignals RX an dem RxD-Anschluss der Kontrollsteuereinrichtung 11 veranschaulicht. Hierbei ergibt sich bei der Schaltung von Fig. 3 ein Signalverlauf für ein Bit des Empfangssignals RX an dem RxD-Anschluss, wie für das Bit 455 in Fig. 4 als Spannung U über der Zeit t gezeigt. Im Vergleich dazu ergibt sich bei einer herkömmlichen Kontrollsteuereinrichtung 11 ein Signalverlauf eines Bits des Empfangssignals RX an dem RxD-Anschluss, wie für das Bit 456 in Fig. 4 gezeigt, da die herkömmliche Kontrollsteuereinrichtung 11 keine zusätzliche Beschaltung mit dem Widerstand 155 hat.

In Fig. 4 zeigt der obere Teil das RxD-Signal oder Empfangssignal RX am µC-Eingang (Pin) oder der Kontrollsteuereinrichtung 11 mit und ohne Befilterung mit dem jeweiligen Widerstand 151, 155. Der untere Teil von Fig. 4 zeigt das in der Kontrollsteuereinrichtung 11 am Ausgang der internen Abtasteinheit in der Auswerteeinheit 111 vorliegende Empfangssignal.

Bei dem Beispiel von Fig. 4 geht den Bits 455, 456 mit dem rezessiven Buszustand 4501 jeweils ein dominanter Buszustand 4502 voraus und folgt den rezessiven Bits 455, 456 ein dominanter Buszustand 4502. Bei diesem Beispiel hat das Bit 456 in dem Empfangssignal RX an dem RxD-Anschluss der herkömmlichen Kontrollsteuereinrichtung 11 einen nahezu rechteckigen Signalverlauf. Demzufolge findet ein Zustandswechsel zwischen dem dominanten Buszustand 4502 und dem rezessiven Buszustand 4501 nahezu ohne zeitliche Verzögerung statt. Im Unterschied dazu hat das Bit 455 in dem Empfangssignal RX an dem RxD-Anschluss der Kontrollsteuereinrichtung 11 von Fig. 3 einen Verlauf, bei welchem der Zustandswechsel von dem dominanten Buszustand 4502 zu dem rezessiven Buszustand 4501 erst langsam von dem dominanten Buszustand 4502 ansteigt und somit nach einer gewissen zeitlichen Verzögerung den rezessiven Buszustand 4501 erreicht.

Als Folge davon erreicht das Bit 455 aufgrund des Widerstands 155 nach einem Zustandswechsel von dem dominanten Buszustand 4502 zu dem rezessiven Buszustand 4501 in Fig. 4 gezeigte Spannungspegel 455A, 456A später als das Bit 456. Dasselbe gilt für einen Zustandswechsel von dem rezessiven Buszustand 4501 zu dem dominanten Buszustand 4502, bei dem das Bit 455 Spannungspegel 456B, 455B jeweils später als das Bit 456 erreicht.

Somit ergibt sich durch die Einbringung der Beschaltung mit dem Widerstand 155 in Zusammenwirken mit einer parasitären Kapazität der Leitung zwischen den RxD-Anschlüssen ein RC-Verhalten auf den Signalleitungen zwischen der Kontrollsteuereinrichtung 11 und der Sende-/Empfangseinrichtung 12. Daraus resultieren weniger steile Flanken für das Bit 455 bei den Zustandswechseln zwischen dem dominanten Buszustand 4502 und dem rezessiven Buszustand 4501, welche einer ansteigenden Flanke des Signals entsprechen. Wie in Fig. 4 veranschaulicht, gilt das Gleiche für den Zustandswechsel von dem rezessiven Buszustand 4501 zu dem dominanten Buszustand 4502, welche einer fallenden Flanke des Signals entsprechen.

Infolgedessen verschiebt die Auswerteeinheit 111 den Empfangspegel am Eingang der Kontrollsteuereinrichtung 11, also am Anschluss RxD der Kontrollsteuereinrichtung 11, für eine ansteigende Flanke des Signals RX von dem Spannungspegel 456A auf den Spannungspegel 455A und für eine fallende Flanke des Signals RX von dem Spannungspegel 456B auf den Spannungspegel 455B. Dies ist beispielsweise durch eine entsprechende Programmierung der Kontrollsteuereinrichtung 11 mit der Auswerteeinheit 111 ausführbar. Außerdem tastet die Kontrollsteuereinrichtung 11 das Bit 455 und somit das Empfangssignal RX nicht mehr mit der herkömmlichen Abtastdauer T1 für ein rezessives Bit 456 ab, sondern mit einer verlängerten Zeitdauer T2. Die Zeitdauer T2 beginnt im Vergleich zu der herkömmlichen Abtastdauer T1 um eine vorbestimmte Zeitdauer T_{V1} später oder ist um eine Verzögerungszeitdauer T_{V1} zeitlich verzögert. Außerdem endet die Zeitdauer T2 im Vergleich zu der herkömmlichen Abtastdauer T1 um eine vorbestimmte Zeitdauer T_{V2} später. Somit ist auch der Endzeitpunkt der Abtastung um eine Verzögerungszeitdauer T_{V2} zeitlich verzögert. Die Verzögerungszeitdauer T_{V1} ist kleiner als die Verzögerungszeitdauer T_{V2}.

Somit wird ein größerer Sicherheitsabstand für die benötigte Mindest-Bitzeit eines einzelnen Bits 455 des CAN-Rahmens oder CAN-FD-Rahmens einer Nachricht 45 in der Steuereinheit 15 erreicht. Genauer gesagt, ändert sich durch den Widerstand 155 der Parameter delta-rec aus insbesondere den Tabellen 13 und 14 der Spezifikation ISO11898-2:2016. Als Folge davon verändert sich auch tbit_rxd der Spezifikation ISO11898-2:2016.

Dadurch können insbesondere die Vorgaben der Spezifikation ISO11898-2:2016 für eine Bitrate von 2 Mbit/s gemäß Tabelle 13 und für eine Bitrate von 5 Mbit/s gemäß Tabelle 14 besser erfüllt werden als mit einer herkömmlichen Steuereinheit, welche den Widerstand 155 nicht aufweist.

Zusätzlich oder alternativ ist der Widerstand 151 in der TxD-Signalleitung vorhanden. In diesem Fall verschiebt die Empfangspegelanpasseinheit 121 den Empfangspegel am Eingang der Sende-/Empfangseinrichtung 12, also am Anschluss TxD der Sende-/Empfangseinrichtung 12 von dem Spannungspegel 456A auf den Spannungspegel 455A und von dem Spannungspegel 456B auf den Spannungspegel 455B. Auch dies ist beispielsweise durch eine entsprechende Programmierung der Sende-/Empfangseinrichtung 12 mit der Empfangspegelanpasseinheit 121 ausführbar. In diesem Fall ändert sich durch den Widerstand 151 der Parameter t-bit-bus aus insbesondere den Tabellen 13 und 14 der Spezifikation ISO11898-2:2016. Als Folge davon verändert sich auch der Parameter tbit_rxd der Spezifikation ISO11898-2:2016.

Mit dem zuvor beschriebenen Verfahren zur Verbesserung der Einhaltung der Bit-Timing-Anforderung in dem Bussystem 1 ist es möglich, zusätzlich oder alternativ in dem Sendesignal TX einen größeren Sicherheitsabstand für die benötigte Mindest-Bitzeit eines einzelnen Bits 455 des CAN-Rahmens oder CAN-FD-Rahmens einer Nachricht 45 in der Steuereinheit 15 zu erreichen. Dadurch können die Vorgaben aus Tabelle 13 und 14 der CAN-Spezifikation ISO11898-2:2016 besser erfüllt werden als mit der herkömmlichen Steuereinheit, welche den Widerstand 151 nicht aufweist.

Die Widerstände 151, 155 sind derart ausgelegt, dass die bewirkte zeitliche Verzögerung der einzelnen Bits 455 des CAN-Rahmens oder CAN-FD-Rahmens einer Nachricht 45 nicht so groß wird, dass die Anforderung der Propagation Delay Time gemäß der CAN-Spezifikation ISO11898-2:2016 nicht erfüllt werden kann. Die Propagation Delay Time gemäß der CAN-Spezifikation ISO11898-2:2016 beträgt maximal 255ns von dem TxD-Anschluss der Kommunikationssteuereinrichtung 11 auf den Bus 40 und von dort zurück über den RxD-Anschluss zu der Kommunikationssteuereinrichtung 11.

Bei einer Modifikation der Schaltung von Fig. 3 wird eine zeitliche Verzögerung in der Signalleitung für das Signal zwischen den TxD-Anschlüssen abhängig vom Buszustand auf dem Bus 40 eingebracht. Zusätzlich wird eine zeitliche Verzögerung in der Signalleitung für das Signal zwischen den RxD-Anschlüssen eingebracht. Die Verzögerung, die in die Signalleitung zwischen den TxD-Anschlüssen eingebracht wird, kann sich von der Verzögerung unterscheiden, die in die Signalleitung zwischen den RxD-Anschlüssen eingebracht wird. Beispielsweise ist hierfür der Widerstandswert mindestens eines der Widerstände 151, 155 abhängig vom Buszustand auf dem Bus 40 einstellbar. Der Buszustand kann beispielsweise sein, dass der minimale Wert oder der maximale Wert gemäß beispielsweise der Tabelle 13 der oben genannten Spezifikation ISO11898-2:2016 für den Parameter tbit_bus = Transmitted recessive bit width = Breite eines gesendeten rezessiven Bits und/oder den Parameter tbit_rxd = Received recessive bit width = Breite eines empfangenen rezessiven Bits und/oder den Parameter Δt_{Rec}^{a} = Receiver timing symmetry = Timing-Symmetrie des Receivers oder Zeitvorgabesymmetrie des Receivers nicht eingehalten ist. Wird beispielsweise als Buszustand ermittelt, dass der Parameter Tbit_bus zu klein ist, dann wird der Widerstand 151 vergrößert. Wird dagegen als Buszustand ermittelt, dass der Parameter Tbit_bus zu groß ist, dann wird der Widerstand 151 verkleinert. Wird beispielsweise als Buszustand ermittelt, dass der Parameter Tbit_bus in dem zulässigen Wertebereich liegt, aber Tbit_rxd zu klein ist, dann wird der Widerstand 155 vergrößert. Wird dagegen als Buszustand ermittelt, dass der Parameter Tbit_bus in dem zulässigen Wertebereich liegt, aber Tbit_rxd zu groß ist, dann wird der Widerstand 155 verkleinert

Die Einstellung des Widerstandswerts kann insbesondere mit der Auswerteeinheit 111 und/oder der Empfangspegeleinstelleinheit 121 ausgeführt werden. Dadurch kann in der Signalleitung, die durch die Einstellung des zugehörigen Widerstands 151, 155 betroffen ist, die zuvor beschriebene Verzögerung der Zustandswechsel oder ansteigenden oder fallenden Flanken des Signals abhängig vom jeweiligen Buszustand eingestellt werden.

Zusätzlich oder alternativ ist die Sende-/Empfangseinrichtung 12, insbesondere die Empfangspegelanpasseinheit 121, bei einer weiteren Modifikation der Schaltung von Fig. 3 zudem ausgestaltet, die Buspegel des TxD-Treibers 122 und/oder des RxD-Treibers 123 entsprechend zu verschieben. Der Buspegel des TxD-Treibers kann sich von dem Buspegel des RxD-Treibers unterscheiden.

Bei noch einer weiteren Modifikation der Schaltung von Fig. 3 ist die Sende-/Empfangseinrichtung 12, insbesondere die Empfangspegelanpasseinheit 121, zudem ausgestaltet, eine zusätzliche Verzögerung der Zustandswechsel oder ansteigenden oder fallenden Flanken des Signals auf das TX-Signal an dem TxD-Anschluss und/oder auf das RX-Signal an dem RxD-Anschluss abhängig vom jeweiligen Buszustand einzubringen. Die Verzögerung, die in das TX-Signal eingebracht wird, kann sich von der Verzögerung unterscheiden, die in das RX-Signal eingebracht wird.

Bei noch einer weiteren Modifikation der Schaltung von Fig. 3 ist die Kommunikationssteuereinrichtung 11, insbesondere die Auswerteeinheit 111, zudem ausgestaltet, eine zusätzliche Verzögerung der Zustandswechsel oder ansteigenden oder fallenden Flanken des Signals abhängig vom jeweiligen Buszustand einzubringen. Auch hier kann sich die Verzögerung, die in das TX-Signal eingebracht wird, von der Verzögerung unterscheiden, die in das RX-Signal eingebracht wird.

Mit Hilfe der genannten Modifikationen ist ein noch größerer Sicherheitsabstand für die benötigte Mindest-Bitzeit eines einzelnen Bits 455 des CAN-Rahmens oder CAN-FD-Rahmens einer Nachricht 45 in der Steuereinheit 15 erreichbar.

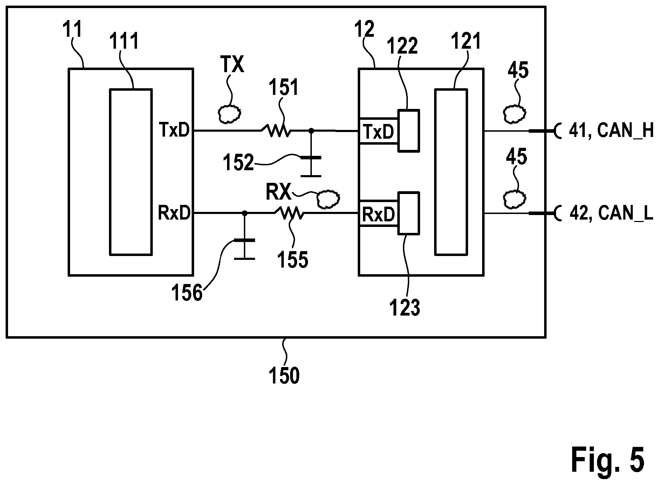

Fig. 5 veranschaulicht eine Steuereinheit 150 gemäß einem zweiten Ausführungsbeispiel. Hier sind zusätzlich zu den Widerständen 151, 155 Kondensatoren 152, 156 mit jeweils einer vorbestimmten Kapazität vorgesehen. Der Widerstand 151 und der Kondensator 152 bilden in der Signalleitung zwischen den Anschlüssen TxD ein RC-Glied. Der Widerstand 155 und der Kondensator 156 bilden in der Signalleitung zwischen den Anschlüssen RxD ein RC-Glied. Die Kapazität des Kondensators 152 wirkt zusätzlich mit der parasitären Kapazität der Leitung zwischen den TxD-Anschlüssen zusammen. Die Kapazität des Kondensators 156 wirkt mit der parasitären Kapazität der Leitung zwischen den RxD-Anschlüssen zusammen.

Auf diese Weise kann die zeitliche Verzögerung des Sendesignals TX und/oder des Empfangssignals RX im Vergleich zu der Steuereinheit 15 für die Verbesserung des Bit-Timings weiter optimiert werden.

Vorzugsweise ist mindestens einer der Kondensatoren 152, 156 in Bezug auf seinen Kapazitätswert einstellbar. Die Einstellung kann insbesondere durch Zu- oder Abschaltung des gewünschten Kondensators 152, 156 mit einem Schalter ausgeführt werden.

Auf diese Weise ist es sehr flexibel möglich, die zeitliche Verzögerung des Sendesignals TX und des Empfangssignals RX je nach Bedarf an den jeweiligen Buszustand anzupassen. Der Buszustand kann beispielsweise sein, dass der minimale Wert oder der maximale Wert gemäß beispielsweise der Tabelle 13 der oben genannten Spezifikation ISO11898-2:2016 für mindestens einen der zuvor genannten Parameter nicht eingehalten ist. Wird beispielsweise als Buszustand ermittelt, dass der Parameter Tbit_bus zu klein ist, dann wird der Widerstand 151 und/oder der Kondensator 152 vergrößert. Wird dagegen als Buszustand ermittelt, dass der Parameter Tbit_bus zu groß ist, dann wird der Widerstand 151 und/oder der Kondensator 152 verkleinert. Wird beispielsweise als Buszustand ermittelt, dass der Parameter Tbit_bus in dem zulässigen Wertebereich liegt, aber Tbit_rxd zu klein ist, dann wird der Widerstand 155 und/oder der Kondensator 156 vergrößert. Wird dagegen als Buszustand ermittelt, dass der Parameter Tbit_bus in dem zulässigen Wertebereich liegt, aber Tbit_rxd zu groß ist, dann wird der Widerstand 155 und/oder der Kondensator 156 verkleinert

Dadurch wird noch ein größerer Sicherheitsabstand für die benötigte Mindest-Bitzeit eines einzelnen Bits 455 des CAN-Rahmens oder CAN-FD-Rahmens einer Nachricht 45 in der Steuereinheit 15 erreicht.

Alle zuvor beschriebenen Ausgestaltungen des Bussystems 1 der Teilnehmerstationen 10, 20,30 und des Verfahrens gemäß den Ausführungsbeispielen und deren Modifikationen können einzeln oder in allen möglichen Kombinationen Verwendung finden. Zusätzlich sind insbesondere folgende Modifikationen denkbar.

Das mit den Steuereinheiten 15, 150 beschriebene Verfahren ist anhand eines Signals gemäß Fig. 4 beschrieben, bei dem einem einzelnen rezessiven Bit 455 eine Dominantphase oder ein dominanter Buszustand 4502 vorausgeht und nachfolgt. Es ist selbstverständlich auch möglich, dass die Dominant- und/oder die Rezessivphase ein oder mehrere Bits umfasst.

Das zuvor beschriebene Bussystem 1 gemäß dem ersten bis dritten Ausführungsbeispiel ist anhand eines auf dem CAN-Protokoll basierenden Bussystems beschrieben. Das Bussystem 1 gemäß dem ersten bis dritten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1 gemäß dem ersten bis dritten Ausführungsbeispiel ist insbesondere ein CAN-Netzwerk oder ein CAN-FD-Netzwerk oder ein FlexRay-Netzwerk.

Die Anzahl und Anordnung der Teilnehmerstationen 10, 20, 30 in den Bussystemen 1 gemäß dem ersten bis dritten Ausführungsbeispiel ist beliebig. Insbesondere können auch nur Teilnehmerstationen 10 oder Teilnehmerstationen 30 in den Bussystemen 1 des ersten bis dritten Ausführungsbeispiels vorhanden sein.

Um eine noch höhere Datenrate zu erzielen, kann innerhalb des CAN-Rahmens der Nachrichten 45, 46, 47 die Datenübertragung analog zu Datenübertragungsprotokollen erfolgen, wie beispielsweise Ethernet, usw.

## Patentansprüche

1. Teilnehmerstation (10; 30) für ein Bussystem (1), mit
einer Sende-/Empfangseinrichtung (12) zum Senden oder Empfangen einer Nachricht (45; 46; 47) an/von mindestens einer weiteren Teilnehmerstation des Bussystems (1) über das Bussystem (1), bei welchem Bussystem (1) zumindest zeitweise ein exklusiver, kollisionsfreier Zugriff einer Teilnehmerstation (10, 20, 30) auf einen Bus (40) des Bussystems (1) gewährleistet ist, und
einer Kommunikationssteuereinrichtung (11) zur Erstellung der von der Sende-/Empfangseinrichtung (12) zu sendenden Nachricht (45; 46; 47) oder zum Lesen der von der Sende-/Empfangseinrichtung (12) empfangenen Nachricht (45; 46; 47) gemäß einem vorbestimmten Kommunikationsprotokoll für das Bussystem (1), und einer Verzögerungseinheit, die zwischen die Kommunikationssteuereinrichtung (11) und die Sende-/Empfangseinrichtung (12) geschaltet ist, um ein von der Kommunikationssteuereinrichtung (11) an die Sende-/Empfangseinrichtung (12) gesendetes Sendesignal (TX) und ein von der Sende-/Empfangseinrichtung (12) empfangenes Empfangssignal (RX) zu verzögern.

2. Teilnehmerstation (10; 30) nach Anspruch 1, wobei die Verzögerungseinheit aufweist
mindestens einen Widerstand (151; 155), der mit einer Kapazität ein RC-Glied bildet, das zwischen die Kommunikationssteuereinrichtung (11) und die Sende-/Empfangseinrichtung (12) geschaltet ist, und
eine Einheit (111; 121), die ausgestaltet ist, eine Empfangsschwelle für ein empfangenes Signal (TX; RX) für eine ansteigende Flanke des Signals (TX; RX) um einen ersten vorbestimmten Wert (T_{V1}) zeitlich zu verzögern und von einem bisherigen Spannungspegel (456A) auf einen niedrigeren Spannungspegel (455A) herabzusetzen und für eine fallende Flanke des Signals (TX; RX) um einen zweiten vorbestimmten Wert (T_{V2}) zeitlich zu verzögern und von einem bisherigen Spannungspegel (456B) auf einen niedrigeren Spannungspegel (455B) herabzusetzen.

3. Teilnehmerstation (10; 30) nach Anspruch 2, wobei die Kapazität eine parasitäre Kapazität der Signalleitung zwischen der Kommunikationssteuereinrichtung (11) und der Sende-/Empfangseinrichtung (12) ist oder zudem eine Kapazität eines Kondensators (152; 156) aufweist, der mit dem Widerstand (151; 155) als RC-Glied verschaltet ist.

4. Teilnehmerstation (10; 30) nach Anspruch 2 oder 3, wobei der mindestens eine Widerstand (151) zwischen einen Anschluss (TxD) der Kommunikationssteuereinrichtung (11), der für ein von der Kommunikationssteuereinrichtung (11) zu sendendes Sendesignal (TX) vorgesehen ist, und einen Anschluss (TxD) der Sende-/Empfangseinrichtung (12) geschaltet ist, der für das von der Kommunikationssteuereinrichtung (11) gesendete Sendesignal (TX) vorgesehen ist.

5. Teilnehmerstation (10; 30) nach Anspruch 3 oder 4, wobei der Kondensator (152) an seinem einen Anschluss mit dem mindestens einen Widerstand (151) und dem Anschluss (TxD) der Sende-/Empfangseinrichtung (12) für ein von der Kommunikationssteuereinrichtung (11) gesendetes Sendesignal (TX) verbunden ist und an seinem anderen Anschluss mit Masse verbunden ist.

6. Teilnehmerstation (10; 30) nach einem der vorangehenden Ansprüche, wobei der mindestens eine Widerstand (155) zwischen einen Anschluss (RxD) der Sende-/Empfangseinrichtung (12), der für ein von der Sende-/Empfangseinrichtung (12) vom Bus empfangenes Empfangssignal (RX) vorgesehen ist, und einen Anschluss (RxD) der Kommunikationssteuereinrichtung (11) geschaltet ist, der für das von der Sende-/Empfangseinrichtung (12) vom Bus empfangene Empfangssignal vorgesehen ist.

7. Teilnehmerstation (10; 30) nach Anspruch 6, wobei der Kondensator (156) an seinem einen Anschluss mit dem mindestens einen Widerstand (155) und dem Anschluss (RxD) der Kommunikationssteuereinrichtung (11) für ein von der Sende-/Empfangseinrichtung (12) empfangenes Empfangssignal (RX) verbunden ist und an seinem anderen Anschluss mit Masse verbunden ist.

8. Teilnehmerstation (10; 30) nach einem der vorangehenden Ansprüche,
wobei die Verzögerungseinheit, ausgestaltet ist, die Verzögerung abhängig vom Buszustand einzubringen, und/oder
wobei die Sende-/Empfangseinrichtung (12) eine Einheit (121) aufweist, die ausgestaltet ist, das auf den Bus (40) zu sendende Signal (CAN_H, CAN_L) abhängig vom Buszustand zeitlich zu verzögern, und/oder
wobei die Kommunikationssteuereinrichtung (11) eine Einheit aufweist, die ausgestaltet ist, das zu sendende Sendesignal (TX) oder das von der Sende-/Empfangseinrichtung (12) vom Bus (40) empfangene Empfangssignal (RX) abhängig vom Buszustand zeitlich zu verzögern, und/oder
wobei die Sende-/Empfangseinrichtung (12) eine Einheit (121) aufweist, die ausgestaltet ist, Buspegel eines TxD-Treibers (122) herabzusetzen und/oder eines RxD-Treibers (123) herabzusetzen.

9. Bussystem (1), mit
einem Bus (40), und
mindestens zwei Teilnehmerstationen (10; 20; 30), welche über den Bus (4) derart miteinander verbunden sind, dass sie miteinander kommunizieren können,
**dadurch gekennzeichnet, dass** mindestens eine der mindestens zwei Teilnehmerstationen (10; 20; 30) eine Teilnehmerstation (10; 30) nach einem der vorangehenden Ansprüche ist.

10. Verfahren zur Verbesserung der Einhaltung der Bit-Timing-Anforderung in einem Bussystem (1), bei welchem zumindest zeitweise ein exklusiver, kollisionsfreier Zugriff einer Teilnehmerstation (10, 20, 30) auf einen Bus (40) des Bussystems (1) gewährleistet ist, wobei die Teilnehmerstation eine Sende-/Empfangseinrichtung (12) zum Senden oder Empfangen einer Nachricht (45; 46; 47) an/von mindestens einer weiteren Teilnehmerstation des Bussystems (1) über das Bussystem (1), und eine Kommunikationssteuereinrichtung (11) zur Erstellung der von der Sende-/Empfangseinrichtung (12) zu sendenden Nachricht (45; 46; 47) oder zum Lesen der von der Sende-/Empfangseinrichtung (12) empfangenen Nachricht (45; 46; 47) gemäß einem vorbestimmten Kommunikationsprotokoll für das Bussystem (1) aufweist, und wobei das Verfahren den Schritt aufweist Verzögern, mit einer Verzögerungseinheit, die zwischen die Kommunikationssteuereinrichtung (11) und die Sende-/Empfangseinrichtung (12) geschaltet ist, eines von der Kommunikationssteuereinrichtung (11) an die Sende-/Empfangseinrichtung (12) gesendeten Sendesignals (TX) und eines von der Sende-/Empfangseinrichtung (12) empfangenen Empfangssignals (RX).

## Claims

1. Subscriber station (10; 30) for a bus system (1), having
a transmission/reception device (12) for transmitting or receiving a message (45; 46; 47) to/from at least one further subscriber station of the bus system (1) via the bus system (1), in which bus system (1), at least intermittently, exclusive collision-free access by a subscriber station (10,20,30) to a bus (40) of the bus system (1) is ensured, and
a communication control device (11) for creating the message (45; 46; 47) to be transmitted by the transmission/reception device (12) or for reading the message (45; 46; 47) received by the transmission/reception device (12) according to a predetermined communication protocol for the bus system (1),
and a delay unit connected between the communication control device (11) and the transmission/reception device (12) in order to delay a transmission signal (TX) transmitted from the communication control device (11) to the transmission/reception device (12) and a received signal (RX) received by the transmission/reception device (12).

2. Subscriber station (10; 30) according to Claim 1, wherein the delay unit has
at least one resistor (151; 155) forming, with a capacitance, an RC element connected between the communication control device (11) and the transmission/reception device (12), and
a unit (111; 121) configured to delay the timing of a reception threshold for a received signal (TX; RX) for a rising edge of the signal (TX; RX) by a first predetermined value (T_{V1}) and to lower said reception threshold from a previous voltage level (456A) to a lower voltage level (455A) and to delay the timing of said reception threshold for a falling edge of the signal (TX; RX) by a second predetermined value (T_{V2}) and to lower said reception threshold from a previous voltage level (456B) to a lower voltage level (455B).

3. Subscriber station (10; 30) according to Claim 2, wherein the capacitance is a parasitic capacitance of the signal line between the communication control device (11) and the transmission/reception device (12) or moreover has a capacitance of a capacitor (152; 156) connected up to the resistor (151; 155) as an RC element.

4. Subscriber station (10; 30) according to Claim 2 or 3, wherein the at least one resistor (151) is connected between a connection (TxD) of the communication control device (11) that is intended for a transmission signal (TX) to be transmitted by the communication control device (11) and a connection (TxD) of the transmission/reception device (12) that is intended for the transmission signal (TX) transmitted by the communication control device (11).

5. Subscriber station (10; 30) according to Claim 3 or 4, wherein the capacitor (152) has its one connection connected to the at least one resistor (151) and the connection (TxD) of the transmission/reception device (12) for a transmission signal (TX) transmitted by the communication control device (11) and has its other connection connected to earth.

6. Subscriber station (10; 30) according to one of the preceding claims, wherein the at least one resistor (155) is connected between a connection (RxD) of the transmission/reception device (12) that is intended for a received signal (RX) received by the transmission/reception device (12) from the bus and a connection (RxD) of the communication control device (11) that is intended for the received signal received by the transmission/reception device (12) from the bus.

7. Subscriber station (10; 30) according to Claim 6, wherein the capacitor (156) has its one connection connected to the at least one resistor (155) and the connection (RxD) of the communication control device (11) for a received signal (RX) received by the transmission/reception device (12) and has its other connection connected to earth.

8. Subscriber station (10; 30) according to one of the preceding claims,
wherein the delay unit is configured to introduce the delay on the basis of the bus state, and/or
wherein the transmission/reception device (12) has a unit (121) configured to delay the timing of the signal (CAN_H, CAN_L) to be transmitted to the bus (40) on the basis of the bus state, and/or
wherein the communication control device (11) has a unit configured to delay the timing of the transmission signal (TX) to be transmitted or of the received signal (RX) received by the transmission/reception device (12) from the bus (40) on the basis of the bus state, and/or wherein the transmission/reception device (12) has a unit (121) configured to lower bus levels of a TxD driver (122) and/or of an RxD driver (123).

9. Bus system (1), having
a bus (40), and
at least two subscriber stations (10; 20; 30) connected to one another via the bus (4) such that they can communicate with one another,
**characterized in that** at least one of the at least two subscriber stations (10; 20; 30) is a subscriber station (10; 30) according to one of the preceding claims.

10. Method for improving the compliance of the bit timing request in a bus system (1), in which, at least intermittently, exclusive collision-free access by a subscriber station (10,20,30) to a bus (40) of the bus system (1) is ensured, wherein the subscriber station has a transmission/reception device (12) for transmitting or receiving a message (45; 46; 47) to/from at least one further subscriber station of the bus system (1) via the bus system (1), and a communication control device (11) for creating the message (45; 46; 47) to be transmitted by the transmission/reception device (12) or for reading the message (45; 46; 47) received by the transmission/reception device (12) according to a predetermined communication protocol for the bus system (1),
and wherein the method has the step of
delaying, by means of a delay unit connected between the communication control device (11) and the transmission/reception device (12), a transmission signal (TX) transmitted from the communication control device (11) to the transmission/reception device (12) and a received signal (RX) received by the transmission/reception device (12).

## Revendications

1. Poste d'utilisateur (10 ; 30) pour un système de bus (1), comprenant
un dispositif d'émission/réception (12) pour émettre ou recevoir un message (45 ; 46 ; 47) à destination/ en provenance d'au moins un autre poste d'utilisateur du système de bus (1) par le système de bus (1), système de bus (1) dans lequel un accès exclusif, sans collision, d'un poste d'utilisateur (10, 20, 30) à un bus (40) du système de bus (1) est garanti au moins temporairement, et
un dispositif de commande de communication (11) pour créer le message (45 ; 46 ; 47) à émettre par le dispositif d'émission/réception (12) ou pour lire le message (45 ; 46 ; 47) reçu par le dispositif d'émission/réception (12) selon un protocole de communication prédéterminé pour le système de bus (1), et
une unité de temporisation qui est couplée entre le dispositif de commande de communication (11) et le dispositif d'émission/réception (12) pour temporiser un signal d'émission (TX) émis par le dispositif de commande de communication (11) au dispositif d'émission/réception (12) et un signal de réception (RX) reçu par le dispositif d'émission/réception (12).

2. Poste d'utilisateur (10 ; 30) selon la revendication 1, l'unité de temporisation présentant au moins une résistance (151 ; 155) formant avec une capacité un circuit RC qui est couplé entre le dispositif de commande de communication (11) et le dispositif d'émission/réception (12), et
une unité (111 ; 121) qui est conçue pour retarder dans le temps d'une première valeur prédéterminée (T_{V1}) un seuil de réception pour un signal reçu (TX ; RX) pour un flanc montant du signal (TX ; RX) et pour l'abaisser d'un niveau de tension précédent (456A) à un niveau de tension inférieur (455A), et pour le retarder dans le temps d'une deuxième valeur prédéterminée (T_{V2}) pour un flanc descendant du signal (TX ; RX) et pour l'abaisser d'un niveau de tension précédent (456B) à un niveau de tension inférieur (455B).

3. Poste d'utilisateur (10 ; 30) selon la revendication 2, dans lequel la capacité est une capacité parasite de la ligne de signal entre le dispositif de commande de communication (11) et le dispositif d'émission/réception (12) ou présente en outre une capacité d'un condensateur (152 ; 156) qui est interconnectée comme circuit RC avec la résistance (151 ; 155).

4. Poste d'utilisateur (10 ; 30) selon la revendication 2 ou 3, dans lequel ladite au moins une résistance (151) est couplée entre une borne (TxD) du dispositif de commande de communication (11), qui est prévue pour un signal d'émission (TX) à émettre par le dispositif de commande de communication (11), et une borne (TxD) du dispositif d'émission/réception (12), qui est prévue pour le signal d'émission (TX) émis par le dispositif de commande de communication (11).

5. Poste d'utilisateur (10 ; 30) selon la revendication 3 ou 4, dans lequel le condensateur (152) est relié au niveau d'une de ses bornes à ladite au moins une résistance (151) et à la borne (TxD) du dispositif d'émission/réception (12) pour un signal d'émission (TX) émis par le dispositif de commande de communication (11) et est relié à la masse au niveau de son autre borne.

6. Poste d'utilisateur (10 ; 30) selon l'une quelconque des revendications précédentes, dans lequel ladite au moins une résistance (155) est couplée entre une borne (RxD) du dispositif d'émission/réception (12) qui est prévue pour un signal de réception (RX) reçu du bus par le dispositif d'émission/réception (12), et une borne (RxD) du dispositif de commande de communication (11) qui est prévue pour un signal de réception reçu du bus par le dispositif d'émission/réception (12).

7. Poste d'utilisateur (10 ; 30) selon la revendication 6, dans lequel le condensateur (156) est relié au niveau d'une de ses bornes à ladite au moins une résistance (155) et à la borne (RxD) du dispositif de commande de communication (11) pour un signal de réception (RX) reçu par le dispositif d'émission/réception (12), et est relié à la masse au niveau de son autre borne.

8. Poste d'utilisateur (10 ; 30) selon l'une quelconque des revendications précédentes, dans lequel l'unité de temporisation est conçue pour introduire la temporisation en fonction de l'état du bus, et/ou le dispositif d'émission/réception (12) présente une unité (121) qui est conçue pour retarder dans le temps le signal (CAN_H, CAN_L) à émettre sur le bus (40) en fonction de l'état du bus, et/ou
le dispositif de commande de communication (11) présente une unité qui est conçue pour retarder dans le temps le signal d'émission (TX) ou le signal de réception (RX) reçu par le dispositif d'émission/réception (12) du bus (40) en fonction de l'état du bus, et/ou
le dispositif d'émission/réception (12) présente une unité (121) qui est conçue pour abaisser le niveau de bus d'un pilote TxD (122) et/ou d'un pilote RxD (123).

9. Système de bus (1), comprenant
un bus (40), et
au moins deux postes d'utilisateur (10 ; 20 ; 30) qui sont reliés l'un à l'autre par le bus (4) de telle sorte qu'ils peuvent communiquer l'un avec l'autre, **caractérisé en ce qu'**au moins l'un des au moins deux postes d'utilisateur (10 ; 20 ; 30) est un poste d'utilisateur (10 ; 30) selon l'une quelconque des revendications précédentes.

10. Procédé d'amélioration du respect de la condition de synchronisation binaire dans un système de bus (1), dans lequel un accès exclusif, sans collision, d'un poste d'utilisateur (10, 20, 30) à un bus (40) du système de bus (1) est garanti au moins temporairement, le poste d'utilisateur présentant un dispositif d'émission/réception (12) pour émettre ou recevoir un message (45 ; 46 ; 47) à destination/en provenance d'au moins un autre poste d'utilisateur du système de bus (1) par le système de bus (1), et un dispositif de commande de communication (11) pour créer le message (45 ; 46 ; 47) à émettre par le dispositif d'émission/réception (12) ou pour lire le message (45 ; 46 ; 47) reçu par le dispositif d'émission/réception (12) selon un protocole de communication prédéterminé pour le système de bus (1), et
le procédé présentant l'étape consistant à
temporiser, par une unité de temporisation, qui est couplée entre le dispositif de commande de communication (11) et le dispositif d'émission/réception (12), un signal d'émission (TX) émis par le dispositif de commande de communication (11) au dispositif d'émission/réception (12) et un signal de réception (RX) reçu par le dispositif d'émission/réception (12).
